# EUROPEAN PATENT SPECIFICATION

(11) **EP 2 904 678 B1**
(45) Date of publication and mention of the grant of the patent: **20.02.2019**
(21) Application number: 13771144.6
(22) Date of filing: 01.10.2013
(51) Int. Cl.: H02J 7/00, H02J 1/02, H02J 9/06, H02J 7/34

(54) **HIGH-EFFICIENCY ELECTRIC CONVERSION AND CONTINUITY MANAGEMENT SYSTEM FOR UNINTERRUPTIBLE POWER SUPPLIES (UPS) AND DERIVED APPARATUSES**
HOCHEFFIZIENTES ELEKTRISCHES UMWANDLUNGS- UND KONTINUITÄTSVERWALTUNGSSYSTEM FÜR UNTERBRECHUNGSFREIE STROMVERSORGUNGEN (USV) UND ABGELEITETE VORRICHTUNGEN
CONVERSION ÉLECTRIQUE À HAUT RENDEMENT ET SYSTÈME DE GESTION DE LA CONTINUITÉ POUR DES SYSTÈMES D'ALIMENTATION SANS COUPURE (UPS) ET APPAREILS CONNEXES

(30) Priority: 04.10.2012 IT AR20120029
(43) Date of publication of application: 12.08.2015
(73) Proprietor: Borri S.p.A., 52011 Bibbiena (AR) (IT)
(72) Inventor: SIMONI, Enrico, I-52014 Poppi (IT); MANCINI, Mario, I-52014 Poppi (IT); FREZZOLINI, Aleandro, I-52011 Bibbiena (IT); VALIANI, Massimo, 52045 FOIANO DELLA CHIANA (Prov. of Arezzo) (IT)
(74) Representative: Modiano, Micaela Nadia
(86) International application number: PCT/EP2013/070406
(87) International publication number: WO 2014/053464

(56) References cited:
- JP-A- H02 164 236
- US-A1- 2003 048 006
- US-A1- 2012 119 581

## Description

The present invention relates to a device and a control method particularly for uninterruptible power supplies (UPS). In particular, the invention relates to a hardware and software architecture of an uninterruptible power supply for energy conversion.

An uninterruptible power supply, hereinafter referenced also as UPS, is an electric machine that has an alternating voltage input (three-phase or single-phase), which generates an alternating output (three-phase or single-phase) of the same or different frequency/amplitude and is adapted to ensure a continuous flow of power to an output load even if the input alternating voltage source is temporarily unavailable.

An integral part of the architecture is an internal/external storage system (usually strings of batteries with disparate manufacturing technology) which ensures the continuity of the supply of power on the load for a preset time if the input mains is unavailable. An emergency system that bypasses completely the UPS (known in the literature as a bypass switch) connects the load directly on an auxiliary input electric mains in case of fault or end of runtime of the UPS proper.

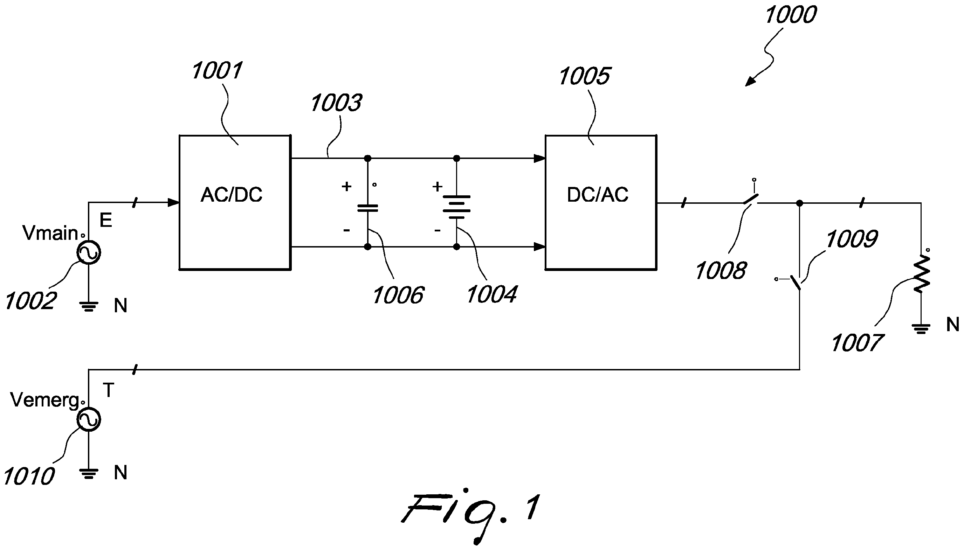

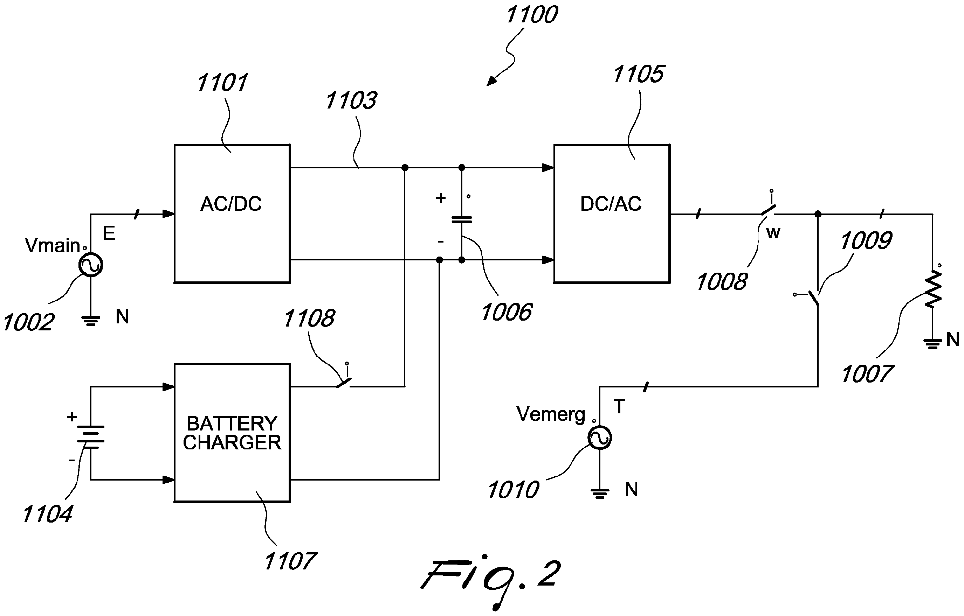

JP H02 164236 discloses a UPS with a device for connecting and disconnecting a battery to a DC bus using a parallel pair of opposing one-way switches, a diode for charging and a thyristor for discharging. Mains ripple during charging is suppressed by an inductor in series with the charging diode. Figure 1 and Figure 2 illustrate the blocks that constitute two examples of UPS of a known type and use different operating principles to achieve the same result.

Figure 1 shows a UPS 1000 which comprises an AC/DC rectification system 1001 that is connected in input to an AC source 1002, for example to the primary electrical mains, with a number of power conductors that can be comprised between two (single-phase systems) and four (three-phase systems with neutral) conductors. The AC/DC rectification system 1001 is connected in output to a DC bus 1003 on which a high-voltage battery string 1004 (the operating values of which are usually comprised between 500 and 900 V DC) and internal capacitors 1006 are arranged.

In the example of Figure 1, the AC/DC rectification system 1001 performs the dual function of battery charger and stabilizer of the voltage of the DC bus 1003 on the internal capacitors 1006.

The DC bus 1003 is connected to the input of a DC/AC inverter system 1005, which supplies the output load 1007, arranged by the user, drawing power from the battery 1004 and/or from the system of internal capacitors 1006 according to the operating logic of the UPS. This DC/AC inverter system 1005 can be isolated from the load by means of a power switch 1008 known as solid-state switch.

In case of failure of one of the internal components of the UPS or if the input voltage 1002 leaves the allowable range, in order to ensure continuity of power on the load, another power switch 1009, known as bypass switch, is closed in order to connect the load 1007 directly to an emergency electrical mains 1010, which in some machine configurations can coincide with the primary mains 1002.

Figure 2 illustrates another UPS 1100 with a medium/low voltage battery string 1104 (the operating values of which are usually comprised between 100 and 500 V DC for the medium-voltage version and between 12 and 100 V for the low-voltage version), arranged outside the DC bus 1103 interposed between the AC/DC rectification system 1101 and the DC/AC inverter system 1105. In this version of the UPS 1100 there are all the elements of the embodiment of Figure 1, in particular the internal capacitor system 1006, the load 1007, the solid-state switch 1008, the bypass switch 1009, the emergency mains 1010. In addition to these components, there is a reversible battery charger (1107), which allows to interface the battery 1104 with the DC bus 1103. The function of this subsystem is to recharge the battery 1104 in the presence of the primary mains 1002 and to supply the DC bus 1103 in case of failure of one of the internal components of the UPS 1100 or if the input mains voltage 1002 leaves the allowable range.

The operating modes that are usually present in a UPS (implemented with more or less complex logic systems) are the following:
- On-Line mode: in this mode, the battery string does not supply power to the load but absorbs it, since it is placed in the recharge/float step. The load 1007 is carried by the AC/DC + DC/AC double conversion system, the bypass switch 1009 is open and the solid-state switch 1008 is closed;
- Off-Line mode: in this mode, the system is powered by the bypass mains 1010 directly and the battery string is placed in a recharge/float condition. When the bypass mains 1010 is unavailable or abandons operating tolerance conditions, the AC/DC + DC/AC double conversion system starts and powers the load 1007 while the bypass switch 1009 is opened.
- High-efficiency mode (Eco-Mode): this is a plurality of variations of the preceding modes, in which the element to be privileged is the efficiency of the transfer of power from the input mains 1002 toward the output load 1007.

From a standpoint of topological solutions, the strategies adopted to provide the power blocks are the most disparate. In particular, the following categories can be distinguished:
- electronic switches: the devices for power bypass on the load are provided by means of active power devices in order to minimize intervention delays in transition between the several states of the operating modes;
- mechanical switches: the devices for power bypass on the load are provided by means of passive devices of the electromechanical type to minimize electrical losses;
- one/two-way systems: the flow of power in the devices 1001, 1101, 1005 and 1105 can be one-way (from the input toward the output but not vice versa) or two-way (from the input toward the output and vice versa). The power flow in the devices 1107, 1008 and 1009 is instead two-way. Among the main advantages of a two-way arrangement there are high dynamic reaction of the system and versatility; among the main disadvantages there are cost, lower reliability and a generalized reduction in conversion efficiency;
- single/multilevel systems: the topological structure of the devices 1001, 1101, 1005, 1105, 1107 can have systems with two voltage levels or complex systems with multiple voltage levels. Among the main advantages of the multilevel system there are the low harmonic content in output of the voltage and of the current in the inductors and the increase in conversion efficiency; among the disadvantages there are the great circuit complexity, the higher cost in terms of components and a higher likelihood of failure.

One drawback linked to UPS that constitute the state of the art is electrical conversion efficiency, which is difficult to improve unless the complexity and costs are increased.

Another drawback relates to the degradation of the battery string, which is due to several causes, including the connection/disconnection strategies thereof and the voltage ripples on the bus 1003 and 1103.

The aim of the present invention is to overcome the drawbacks of the background art, by devising a device and a method particularly for uninterruptible power supplies that has high electrical conversion efficiency but low topological complexity.

Within this aim, an object of the invention is to prevent degradation phenomena on the battery string.

Another object of the invention is to improve the harmonic content of the current under the voltage in output on the load.

Moreover, an object of the invention is to allow smart management of the connection and disconnection of the battery on the DC bus.

A further object of the invention is to provide a device and a method particularly for uninterruptible power supplies that is highly reliable, relatively easy to provide and at competitive costs.

This aim, as well as these and other objects that will become better apparent hereinafter, are achieved by a device, by a UPS, by an inverter and by a process according to the independent claims.

Further characteristics and advantages of the invention will become better apparent from the description of preferred but not exclusive embodiments of the device and of the process according to the invention, illustrated by way of nonlimiting example in the accompanying drawings, wherein:
Figure 1 is the diagram of a UPS of a known type with integrated battery charger;
Figure 2 is the diagram of another UPS of a known type with separate battery charger;
Figure 3 is the diagram of a UPS with integrated battery charger and with a connection/disconnection device according to the invention;
Figure 4 is the diagram of the connection/disconnection device used in Figure 3;
Figure 5 plots the average voltage ripple on the bus capacitor as a consequence of different driving strategies of the switch 2 of Figure 4;
Figure 6 is a table of operating constants that exemplify the control algorithm of the present invention;
Figure 7 is a diagram of the state machine of the control system of the UPS of Figure 3 and of the corresponding device of Figure 4;
Figure 8 shows examples of electrical conditions that must occur within the UPS system of Figure 3 in order to be able to declare as being set a certain set of flags used in the state diagram of Figure 7, together with the exemplifying constants shown in Figure 6;
Figure 9 plots the total electric conversion efficiency (understood as the filtered ratio between the electric power levels of the active type supplied to the load 1007 and drawn from the primary electrical mains 1002) in the On-Line mode with double conversion as some operating parameters of the UPS vary;
Figure 10 exemplifies in some operating points Figure 9 in order to illustrate the benefit in terms of electrical efficiency that is the object of the present invention;
Figure 11 is the diagram of a UPS with a separate battery charger and with a connection/disconnection device according to the invention.

With reference to the figures, a device according to a first embodiment of the invention, generally designated by the reference numeral 1, is applied in parallel on the DC bus 103 of a UPS 100 of the type of Figure 1, i.e., comprising an AC/DC rectification system 101 that is connected in input to an AC source 1002, for example to the primary electrical mains, with a number of power conductors that can be comprised between two conductors (single-phase system) and four conductors (three-phase system with neutral).

The AC/DC rectification system 101 performs the function of battery charger and stabilizer of the voltage of the DC bus 103 on the internal capacitors of the device 1.

The DC bus 103 is connected to the input of a DC/AC inverter system 105, which supplies the output load 1007, drawing power from the batteries and/or internal capacitors of the device 1. The DC/AC inverter system 105 can be isolated from the load by means of a solid-state switch 1008.

There is further a bypass switch 1009 in order to connect, if one of the internal components of the UPS 100 fails or if the voltage of the input mains 1002 abandons the allowable range, the load 1007 directly to an emergency electrical mains 1010, which can optionally coincide with the primary mains 1002.

The device 1 according to the invention has two bank sections of batteries with the same name plate data, 4a and 4b, preferably of the high-voltage type (500-900 V DC), the series arrangement of which constitutes the battery of the UPS 100. Each battery 4a and 4b can be constituted optionally by a group of batteries arranged in series or in parallel to each other. The embodiment described here considers the case in which the two battery bank sections are each composed of a single battery 4a and 4b.

Both batteries 4a and 4b can be connected optionally to a common node P that is equipotential to the neutral conductor N of the input mains 1002, by means of a two-way switch 2 that connects the node P to the node F for mutual connection of the two batteries 4a and 4b.

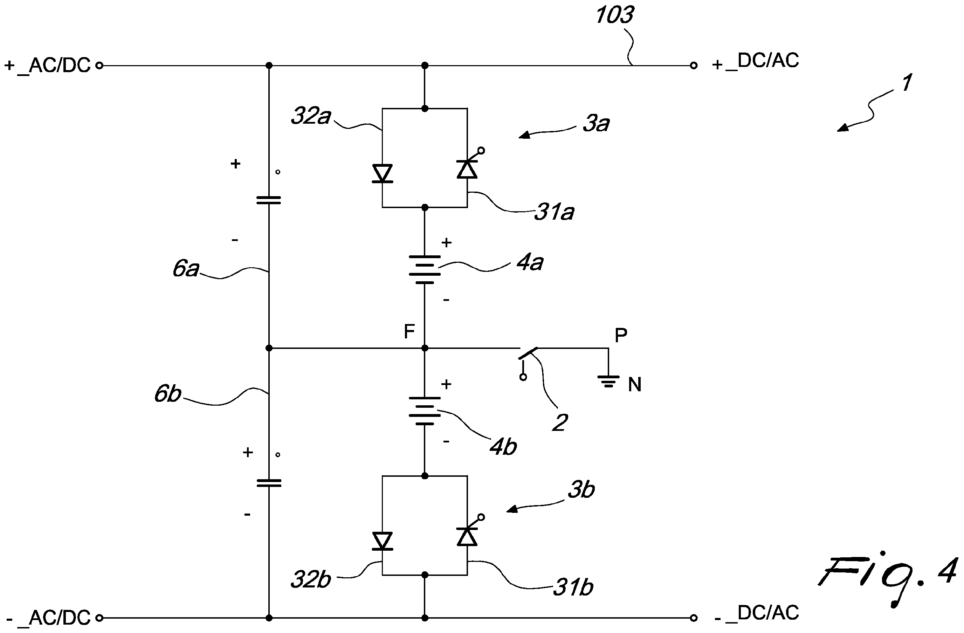

The DC bus 103 is buffered by an adapted bank of capacitors having the same name plate data 6a, 6b, each arranged in parallel to the series between the respective battery 4a/4b and a respective connection/disconnection assembly 3a, 3b, described hereinafter. These capacitors 6a, 6b can be optionally separated with respect to the device 1 and provided on the DC bus 103 in output to the rectification system 101, on condition that their mutual connection point F is connected to the mutual connection point of the batteries 4a and 4b, as shown in Figure 4.

Each battery 4a and 4b is connected to a respective branch of the bus 103 by means of the respective connection/disconnection assembly 3a, 3b, each comprising two one-way switches 31a, 32a, 31b, 32b, which are mutually connected in parallel and are arranged so as to conduct current in mutually opposite directions.

In particular, with reference to the first battery 4a, referenced here also as positive bank section, the first connection/disconnection assembly 3a comprises a first switch 31a of the active type or provided with a gate terminal for corresponding control and a second switch 32a, for example a one-way device that is not controlled. In particular, the first switch 31a can be an electronic switch that can be voltage-controlled, for example a thyristor, while the second switch 32a can be a passive diode.

In the preferred embodiment of the invention shown in the figures, the first switch 31a is an SCR (semiconductor-controlled rectifier) with the anode on the positive pole of the battery 4a, with the cathode on the positive pole of the DC bus 103 and with the gate connected to a control system that is adapted to operate the device 1 and the UPS 100 with the process according to the invention.

The diode 32a is connected in parallel to the SCR 31a but with the anode on the positive pole of the DC bus and the cathode on the positive pole of the battery 4a, so as to conduct current in the opposite direction with respect to the direction of the SCR 31a.

As regards the negative bank section, the second connection/disconnection assembly 3b is connected between the negative pole of the battery 4b and the negative pole of the DC bus 103 and is provided with switches 31b, 32b that are identical to those of the first connection/disconnection assembly 3a.

For example, as shown in the figures, there is an SCR 31b with the anode on the negative pole of the DC bus 103 and the cathode on the negative pole of the battery 4b and a passive diode 32b with the cathode on the negative pole of the DC bus 103 and the anode on the negative pole of the battery 4b.

The function of the first switch 31a, 31b is to connect/disconnect under power the bank sections of the battery dynamically during the discharge step. Since this is a one-way switch, it does not influence the charging step of the battery but only the discharge step. The fact that it can be voltage-controlled by means of an adapted external control system allows to implement procedures for dynamic connection and disconnection that are adapted to extend the life of the batteries 4a and 4b, to isolate them in case of failure and to increase the conversion efficiency of the system.

The function of the second switch or uncontrolled one-way device 32a, 32b is to connect statically the DC bus 103 to the bank section in order to allow its recharging step. Since this is a one-way device, it does not influence the discharge step but only the charging step. The presence of this component allows a battery charger, implemented by the AC/DC rectification system 101 or by a dedicated circuit, to vary the voltage of the DC bus 103 dynamically, with a benefit for battery management and electrical efficiency.

The two-way switch 2 connected between the node F for mutual connection of the two batteries 4a and 4b and the common reference point P can be for example of the SCR type or can be an electromechanical passive two-way switch.

The function of the switch 2 is to isolate the reference point P with respect to the bank sections. This allows to manage the voltage ripple on the bank sections 4a and 4b in a smart manner and to extend considerably the life of the batteries.

The theoretical and practical justification for the insertion of the two-way switch 2 is the variation of the voltage ripple across the individual bank sections 4a and 4b.

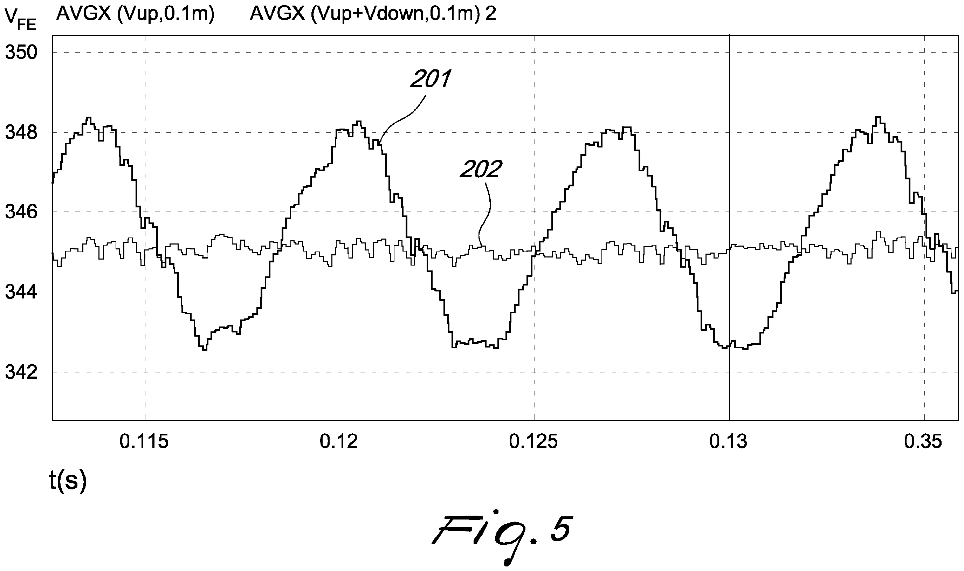

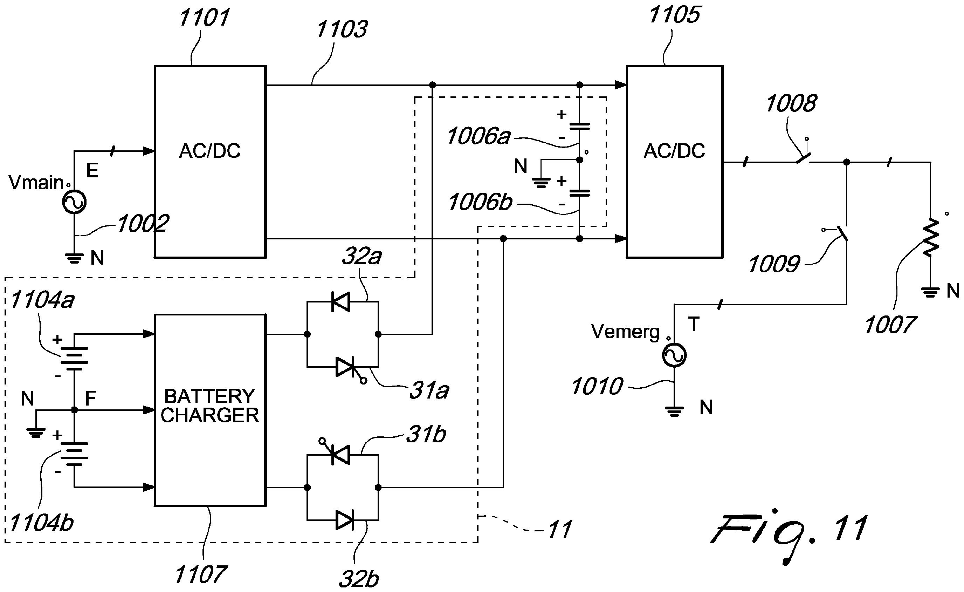

When the switch 2 is closed, each individual bank section is connected to the point P, which is the connection point with respect to which the battery charger (the AC/DC rectification system 101 or an external battery charger, such as the one designated by 1107 in Figure 11) performs the recharging process, and to the neutral of the load 1007 in output. The fact that it is connected entails the presence of a voltage ripple on the battery, which has a behavior 201 plotted in Figure 5.

When the switch 2 is open, the common point F of each bank section is isolated from the neutral point P, but from a dynamic point of view its voltage still coincides on average with that of the point P. This last property still allows the rules of control of input power adjustment performed by the battery charger to work. The demonstration of this property derives from basic theory of electrical systems: for example, if one considers a balanced three-phase input system, it is demonstrated that the voltage between the input source 1002 and the node F has a null average component and a component at a frequency that is three times that of the mains 1002 (third harmonic component) that does not intervene in the flow of active power. Conversely, the voltage ripple that each bank section 4a and 4b receives is considerably lower than if the point P is in short-circuit with the node F, for example with the behavior 202 shown in Figure 5. A smaller voltage ripple (and therefore current ripple) leads to a lower electrochemical stress of the elements of the battery and therefore to an extension of its life and to a reduction of the likelihood of failure.

The switch 2 can be driven according to several strategies.

According to a first strategy, the switch 2 can be driven by following the logic of the output load 1007 of the DC/AC inverter system 105.

In particular, if the power required by the load 1007 and delivered by the DC/AC inverter system 105 is lower than a certain threshold of the percentage load (for example 30% of nominal power), the switch 2 is kept closed. In this condition, the current ripple that occurs over the capacitors 6a and 6b and therefore over the batteries 4a and 4b is modest.

If instead the power required by the load 1007 and delivered by the DC/AC inverter system 105 is greater than a certain threshold of the percentage load (for example 30% of nominal power), the switch 2 is kept open. In this condition, the current ripple that occurs over the capacitors 6a and 6b and therefore over the batteries 4a and 4b would be high if the switch was closed, and therefore one benefits from the advantages explained earlier.

According to another strategy, the switch 2 can be driven by following the logic of battery recharging in the Off-Line mode, i.e., in the mode in which the load 1007 is maintained by the emergency mains 1010 and the DC/AC conversion system 105 is kept off or on with no load. The battery charger 1107, if any, or the AC/DC rectification system 101 are instead kept on to recharge the battery string or keep it in a buffer condition.

In this second strategy for driving the switch 2, the logic that is followed is as follows.

If the power delivered by the AC/DC rectification system 101 or by the optional battery charger 1107 is high because the battery is in the recharging step, the switch 2 is kept open. In this condition, the current ripple that occurs over the capacitors 6a and 6b and therefore over the batteries 4a and 4b would be high, because the recharging current is high. Keeping the switch 2 open, instead, mitigates the problem without compromising the recharging process.

If instead the power delivered by the AC/DC rectification system 101 or by the optional battery charger 1107 is low because the battery is in the floating step, the switch 2 is kept closed. In this condition, the current ripple that occurs over the capacitors 6a and 6b and therefore over the batteries 4a and 4b is low because the recharging/floating current is low.

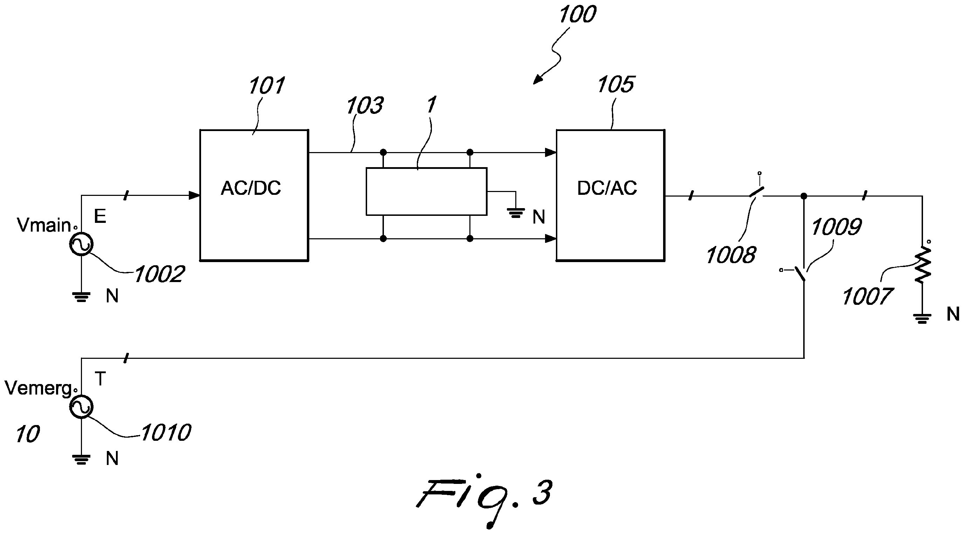

In a second embodiment of the invention, shown in Figure 11, the battery charger function is entrusted to an external battery charger 1107 of the reversible type, such as the one of Figure 2. In this case, the UPS comprises an AC/DC rectification system 1101 without battery charger functions, a DC/AC inverter system 1105 and a DC bus 1103 that connects the two AC/DC and DC/AC systems and is buffered by an adapted bank of capacitors 1006a and 1006b that have the same name plate data. In input and in output to the UPS of Figure 11 there are the same elements as in the first embodiment of Figure 3.

A device 11 according to the second embodiment of the invention comprises a connection/disconnection assembly for each one of two battery bank sections 1104a and 1104b that have the same name plate data, preferably at high voltage (500-900 V DC), the series arrangement of which constitutes the battery of the UPS of Figure 11. Each battery 1104a and 1104b can be constituted optionally by a group of batteries, arranged in series or in parallel to each other. In the second embodiment described here, the case is considered in which the two battery bank sections are each composed of a single battery 1104a and 1104b.

Both batteries 1104a and 1104b can be connected optionally to a common node that is equipotential to the neutral conductor N of the input mains 1002, by means of a two-way switch (not shown in the figure) that connects the common node to the node F for mutual connection of the two batteries 1104a and 1104b.

The capacitors 1006a, 1006b can be included in the device 11 or can be separate with respect to the device 11 and provided on the DC bus 1103 in output to the rectification system 1101. In both cases, the point of mutual connection of the capacitors 1006a, 1006b is rendered equipotential with respect to the point of mutual connection of the batteries 1104a and 1104b, as shown in Figure 11.

Each battery 1104a and 1104b is connected to a respective branch of the bus 103 by means of the respective connection/disconnection assembly, with the interposition of the reversible battery charger 1107, which is also connected to the same potential as the mutual connection point of the batteries 1104a and 1104b. Each connection/disconnection assembly is structurally identical to the one of the first embodiment, i.e., comprises two one-way switches 31a, 32a, 31b, 32b, which are mutually connected in parallel and are arranged so as to conduct current in mutually opposite directions.

As in the first embodiment, the first switch 31a is of the active type or provided with a gate terminal for the corresponding voltage or current control, for example a thyristor or an SCR, while the second switch 32a is a one-way uncontrolled device such as a passive diode.

In the particular case in which an SCR is used as a first switch 31a, the corresponding anode is connected to the positive pole of the battery 1104a by means of the battery charger 1107 and has the cathode on the positive pole of the DC bus 1103 and the gate connected to a control system adapted to operate the device 11 and the UPS of Figure 11 by means of the method according to the invention.

The diode 32a is connected in parallel to the SCR 31a, but with the anode on the positive pole of the DC bus 1103 and the cathode connected to the positive pole of the battery 1104a by means of the battery charger 1107, so as to conduct current in the opposite direction with respect to the direction of the SCR 31a.

As regards the negative bank section, the second connection/disconnection assembly is connected between the negative pole of the battery 1104b, by means of the battery charger 1107, and the negative pole of the DC bus 1103 and has switches 31b, 32b that are identical to those of the first connection/disconnection assembly.

For example, as shown in the figures, there is an SCR 31b with the anode on the negative pole of the DC bus 1103 and the cathode connected to the negative pole of the battery 1104b by means of the battery charger 1107, and there is a passive diode 32b with the cathode on the negative pole of the DC bus 1103 and the anode connected to the negative pole of the battery 1104b.

The first switches 31a, 31b of the connection/disconnection assemblies of both embodiments of Figures 3 and 11 can be used in a particularly advantageous embodiment to perform the functions of management of the battery charging process, management of the transition of operating modes (On-Line, Off-Line, Eco-Mode) and disconnection of the battery in case of failure by resorting to a control system, which can be provided circuitally easily by a person skilled in the art and is characterized in that it implements a state machine and a process according to the invention for performing the above cited functions.

These functions lead to a preservation of the life of the battery and to an increase in the overall electrical efficiency of the UPS, as will be described hereinafter.

The control system is adapted to control at least the first switches 31a, 31b of the device (1 or 11) to connect or disconnect it with respect to the DC bus, to detect the voltage on the DC bus and to set setpoint voltages of the AC/DC rectification system. Moreover, the control system is adapted to control the activation and deactivation of the AC/DC rectification system, of the DC/AC inverter system, and to access and switch off the solid-state switch 1008, the bypass switch 1009 and optionally the switch 2, if present.

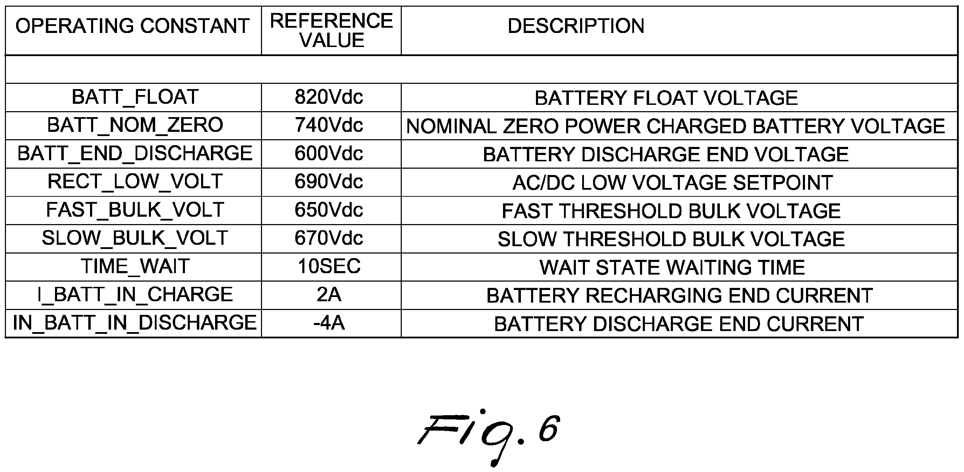

To understand the control diagram, consider the UPS of Figure 3, which shows some operating constants listed in the table of Figure 6, which will be used, without any restriction on generality, to illustrate the operating modes of the present invention.

The same remarks on operation that follow will apply also to the control of the UPS according to the second embodiment of Figure 11.

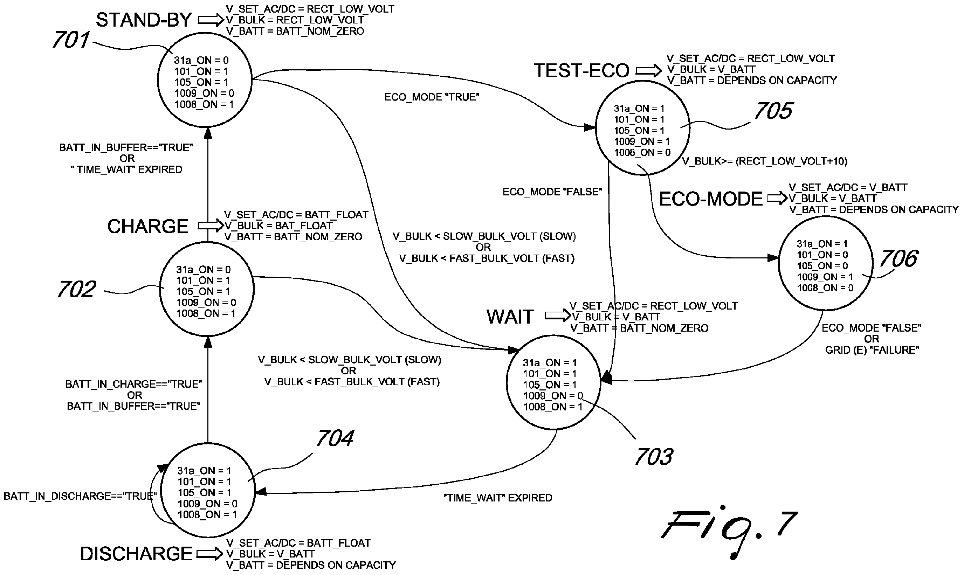

The management of the first and second switches 31a, 31b, 32a, 32b in combination with the elements 101, 105, 1008 and 1009 follows the state diagram given in Figure 7, which shows the operating modes according to the invention.

For the sake of simplicity, the operation of the state machine is described only for the positive bank section of the battery 4a and for the positive bank section 6a of the DC bus 103: the conditions must be assumed to be replicated and valid also for the negative bank sections 4b and 6b.

Before proceeding, it is specified that the expression "galvanically disconnected" is understood to reference a component of the electric circuit the terminal input and/or output nodes of which are not physically connected to other terminals of other elements of the circuit to which it belongs, whereas "electrically disconnected" is understood to reference a component of the electric circuit the terminal nodes of which are both connected to other nodes of the circuit to which it belongs but is not affected by exchanges of electrical charges, i.e., of electric currents, with other components of the circuit.

With reference to Figure 7, considering the system initially in the "Standby" state 701, the first switch 31a is open ("31a_ON=0") and the rectification system 101 is started ("101_ON=1") and set to generate a voltage on the DC bus 103 ("bulk voltage" or V BULK) equal to "RECT_LOW_VOLT", i.e., to a preset setpoint value of low voltage of the AC/DC, that is lower in value, preferably by 5% to 10%, than the nominal voltage ("BATT NOMZERO") of the series of the batteries 4a+4b in the fully charged state and at zero power. The DC/AC inverter system 105 is started (105_ON=1) and supplies power to the load 1007, since the solid-state switch 1008 is closed ("1008_ON=1") and the bypass switch 1009 is open ("1009_ON=0").

Since the voltage "RECT LOW-VOLT" is lower than the nominal voltage at zero power of the charged battery ("BATT NOM ZERO"), the diode 32a is off. Since the first switch 31a is kept open and arrives from the "Charge" state 702 described hereinafter, the first switch 31a is off: the result is that in this state the battery 4a is disconnected electrically from the DC bus 103 of the UPS 100, because it is not affected by the flow of current.

The load 1007 is supported by the AC/DC + DC/AC double conversion system 101 and 105, since the bypass switch 1009 also is in the open position and the solid-state switch 1008 is closed. This is the operating state in which the UPS 100 operates normally in the double conversion On-Line mode and passes most of the time in this state.

The fact that the battery 4a is disconnected electrically from the DC bus 103 has the advantage of preserving it and of extending its life with respect to systems which, despite not discharging/floating it, keep it still electrically connected to the DC bus.

The additional advantage of this management also resides in the improvement in the electrical efficiency of the machine, as will be described hereinafter.

Several migrations from this standby state 701 are possible. If a voltage drop of the DC bus 103 below a first voltage threshold "SLOW BULK VOLT" occurs within a preset long observation time (comprised by way of indication between 1 second and 10 seconds) or below a second voltage threshold "FAST BULK VOLT" within a preset short observation time (comprised by way of indication between 0.001 seconds and 0.5 seconds), one moves to the "Wait" state 703. The reduction of the bulk voltage can occur for different reasons, such as the lack of the input mains 1002 that supplies the AC/DC rectification system 101, the failure of one or more circuits of said system, the self-discharge of the battery 4a, or any other phenomenon that causes loss of charge in the capacitor 6a.

In the "Wait" state 703, the only variation with respect to the "Standby" state 701 is the closure of the first switch 31a of the device 1. Since the voltage setpoint of the AC/DC has not been altered, the first switch 31a starts to conduct and the battery 4a is thus connected electrically to the DC bus 103 in the discharge mode and brings the DC bus 103 to the "BATT NOMZERO" voltage. In this step, the load 1007 is powered both by the AC/DC + DC/AC double conversion system 101 and 105 and by the battery 4a.

After a preset time "TIME WAIT" for waiting in the state 703, one passes to the "Discharge" state 704. In this state there are no changes to the operating state of the components 31a, 101, 105, 1008 and 1009 and the setpoint of the AC/DC rectification system 101 is brought to the floating voltage value of the battery 4a "BATT FLOAT", which has a value that is higher, preferably by 5-10%, than the nominal voltage (BATT NOM ZERO) of the series of the batteries 4a+4b in the charged state and at zero power. The purpose of this action is to trigger the battery charging process (if possible) by raising the voltage across the batteries 4a and 4b: the determination of what occurs derives from the monitoring of the current that enters the battery 4a (concisely referenced here as "I_BT") and of the voltage of the DC bus 103 (referenced here as "V_BT"), which in this step coincides with the voltage of the batteries 4a and 4b, since the first switches 31a and 31b are closed.

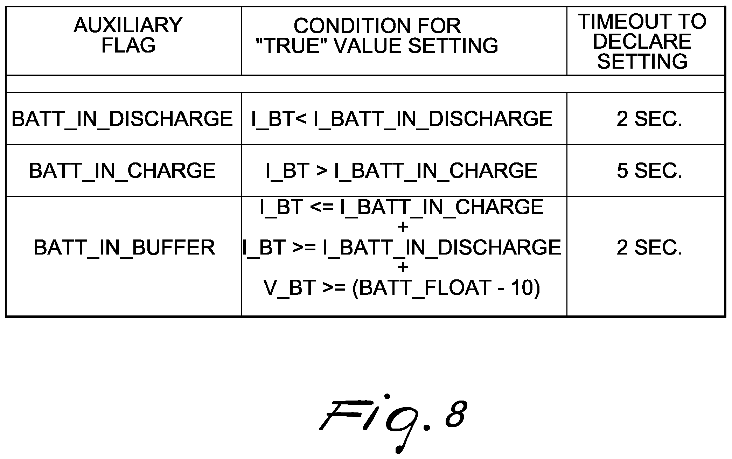

For current monitoring, it is useful to define flags of the Boolean type, i.e., which assume the value "TRUE" if the conditions are verified or "FALSE" if they are not verified, such as the ones indicated in Figure 8. In particular, one remains in the "Discharge" state 704 until the flags "BATT_IN_CHARGE" or "BATT_IN_BUFFER" assume the value "TRUE".

In particular, the "BATT_IN_CHARGE" flag is set to "TRUE" when I_BT becomes greater than the recharge end current of the battery 4a (I_BATT_IN_CHARGE).

The "BATT_IN_BUFFER" flag is set to "TRUE" when I_BT becomes greater than or equal to the discharge end current of the battery 4a (I_BATT_IN_DISCHARGE), smaller than or equal to to the recharge end current of the battery 4a and V_BT is greater than or equal to a preset voltage value that is slightly smaller than BATT_FLOAT, for example lower than 10 V DC, as indicated in Figure 8: when these conditions occur on BATT_IN_CHARGE or on BATT_IN_BUFFER, one migrates to the Charge state 702.

Optionally, before setting the value of the flags to "TRUE", it is possible to set a timeout period during which the detected condition persists.

In the "Charge" state 702, the battery 4a is subjected to the charging process, controlling the voltage across it. Since the battery must not be discharged, the first switch 31a is opened and, in order to provide its off state (i.e., the actual elimination of the current that flows through it), the voltage setpoint of the AC/DC rectification system 100 is set to the value "BATT_FLOAT". The battery 4a has a voltage that is in any case comprised between its discharge end voltage "BATT_END_DISCHARGE" and its floating voltage "BATT_FLOAT", and therefore the first switch 31a is reverse biased and actually opens. The diode 32a starts to conduct and therefore the battery 4a can absorb current from the DC bus 103 to perform the recharging step.

The UPS 100 remains in the "Charge" state 702 for a certain time until the battery 4a ends the charging step; at this point one migrates again to the "Standby" state 701, in which the battery, which is now charged, is disconnected electrically (for charging and discharge) from the DC bus 103.

From the "Standby" state 701, one passes to the "Test-Eco" status 705 if a mode referenced here as "ECOMODE" is activated: this state is used to test the capacity of the battery string 4a and 4b to deliver charge before migrating to a "saving" mode state. In this state, the AC/DC rectification system 101 is started and the first switch 31a is closed: therefore, the battery 4a is connected electrically for charging and discharging to the DC bus 103.

The DC/AC inverter system 105 is started but does not supply the load 1007, because the solid-state switch 1008 is open. The load 1007 is carried directly by the emergency electrical mains 1010 because the bypass switch 1009 is closed.

In this step 705, the setpoint of the voltage of the AC/DC rectification system 101 is still the low one ("RECT_LOW_VOLT"): closure of the first switch 31a connects the battery 4a to the DC bus 103 and if the battery 4a still has runtime it forces the voltage of the DC bus to a value that tends to the nominal voltage at zero power with a charged battery ("BATT_NOM_ZERO") by means of the first switch 31a. If instead the battery 4a has no runtime, its voltage is close to the discharge end voltage ("BATT_END_DISCHARGE") and is recharged by means of the second switch 32a by the AC/DC rectification system 101. One migrates to the saving state 706 ("Eco-mode") only if one observes that the voltage of the DC bus 103 is higher by a certain value than the current setpoint value of the AC/DC "RECT_LOW_VOLT", so as to indicate a battery with charging capacity or a recharged battery.

In the "Eco-mode" state 706, the electrical efficiency of the UPS 100 is optimized in the Off-Line mode and maximum reactivity to restoration of the On-Line Double Conversion mode is ensured in case of failure or if the range of allowable voltages of the bypass mains 1010 is abandoned.

Both the AC/DC rectification system 101 and the DC/AC inverter system 105 are stopped, while the first switch 31a is kept closed and the battery 4a is kept connected to the DC bus 103 (a battery that substantially is neither charged nor discharged) and the load 1007 is supplied by the emergency mains 1010 by means of the bypass switch 1009.

When an exit from tolerance of the emergency mains 1010 that is powering the load 1007 is detected, by means of an amplitude and frequency monitoring of the electrical mains, one passes immediately to the "Wait" state 703, restarting the AC/DC system 101 and the DC/AC system 105 and switching from the line with simultaneous opening of the bypass switch 1009 and closure of the solid-state switch 1008.

As mentioned, the introduction of the one-way switches 31a, 31b, 32a and 32b can be used to have a considerable increase in the electrical efficiency of the machine.

To understand fully the present invention, one should consider how the elements 101, 1107, 105, 1008 and 1009 are usually provided in the current background art.

The switches 1008 and 1009 are provided by means of electronic technology in order to minimize the insertion/disconnection time by using SCR diodes. These components have mainly conduction losses that depend on the direct current and negligible switching components at the frequency of the mains 1002.

The AC/DC system 101, the battery charger system 1107 and the DC/AC system 105 are provided by means of IGBT or MOSFET technology according to disparate topologies and are driven according to pulse width modulation (PWM) techniques. These subsystems are affected by several kinds of loss due to the technological and constructive characteristics of the components. One distinguishes in particular:
- IGBT conduction losses, which depend on the direct current that flows in the component;
- diode conduction losses, which depend on the direct current that flows through the diodes that allow recirculation of the power toward the DC part of the UPS;
- IGBT switching losses, which depend on the switching frequency of the PWM proportionally, on the DC voltage across the component at on-off and off-on switching, and on the constructive characteristics of the IGBT component;
- diode recovery losses, which depend on the switching frequency of the PWM proportionally, on the DC voltage across the component at on-off and off-on switching, and on the constructive characteristics of the IGBT components and diodes according to the phenomenon of "Recovery Charge", which is known in the literature;
- inductor losses: in order to limit the current in input from the mains 1002 or in output toward the load 1007, power inductors are added between the electrical mains/load and the semiconductor part, and said inductors are affected by losses in the copper winding, hysteresis losses and eddy currents in the ferromagnetic core. For equal constructive characteristics, the losses in the copper depend on the current and the losses in the iron depend on the quantity of current ripple that is present in the inductor.

The input/output current cannot be changed, since it is set by the power rating of the machine and by the nominal values of the electrical mains 1002 and the nominal values to be generated on the load 1107. Therefore, for equal components and characteristics thereof, all the conduction losses described cannot be optimized appreciably.

Switching losses instead can be reduced significantly, for equal components and characteristics thereof, by lowering the voltage at which the IGBT/MOSFET switches switch: this voltage is none other than the bulk voltage (i.e., the DC voltage in output from the AC/DC rectification system) or, in the case of the invention, the half-bulk voltage, which is a parameter that can be varied dynamically thanks to the use of the AC/DC rectification system 101 or of the battery charger 1107 and can be controlled according to a couple logic that can be as complex as one wishes.

The increase in machine efficiency can be achieved by raising the bulk voltage in output from the AC/DC rectification system 101 or from the battery charger 1107 to a relatively low value, in particular to the value "RECT_LOW_VOLT", which can be comprised by way of indication between 90% and 95% of nominal voltage ("BATT_NOM_ZERO") of the series of the batteries 4a +4b (or 1104a+1104b) in a fully charged state and at zero power.

This value must be lower than the "BATT_NOM_ZERO" voltage of the battery 4a, so as to inhibit its recharging, and requires the battery 4a to be disconnected in discharge from the DC bus 103 by the switch-off of the first switch 31a. In this manner there is no conflict between the need to extend the operating life of the battery 4a, keeping it disconnected electrically from the DC bus 103 of the UPS 100, to ensure full runtime and to increase the electrical transfer efficiency of the machine.

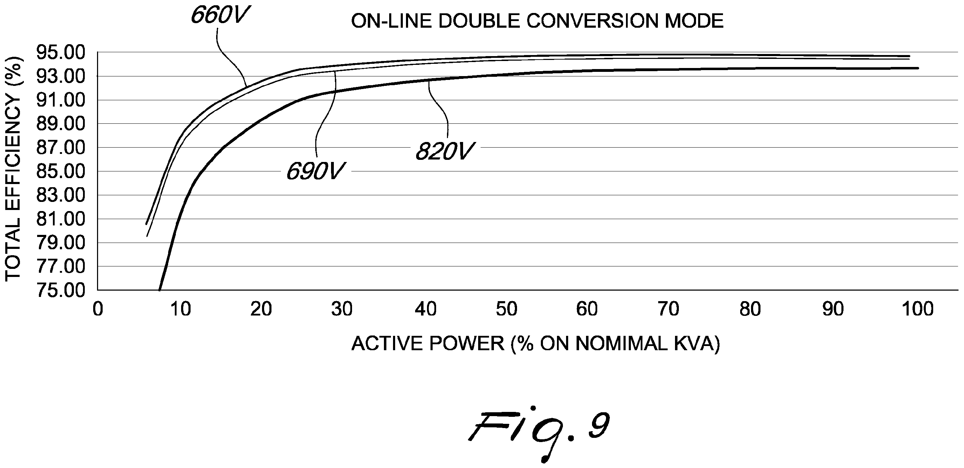

Figure 9 shows a comparison between the electrical conversion efficiency in the On-Line Double Conversion mode as the percentage load varies (from 0% to 100%) as a function of the total bulk voltage that the AC/DC rectification system 101 or the battery charger 1107 forces on the DC side of the UPS 100. The comparison is provided for three bulk voltages that are close to the ones of interest referenced in Figure 6. As can be noted, efficiency is high even with very low percentage loads.

In the current background art, the battery is kept constantly connected electrically to the DC bus and the AC/DC rectification system needs to force a voltage that is at least equal to "BATT_FLOAT" to avoid the battery from intervening in discharge on the flow of power when there is no need, thus keeping it in floating conditions.

The method presented here, thanks to the smart use of the first one-way switch 31a in combination with the AC/DC rectification system 101, allows a total electric efficiency gain (for equal components and topology of the AC/DC rectification system 101 and, therefore, an equal cost) of approximately 1% at the point of maximum efficiency at 75% of the nominal power.

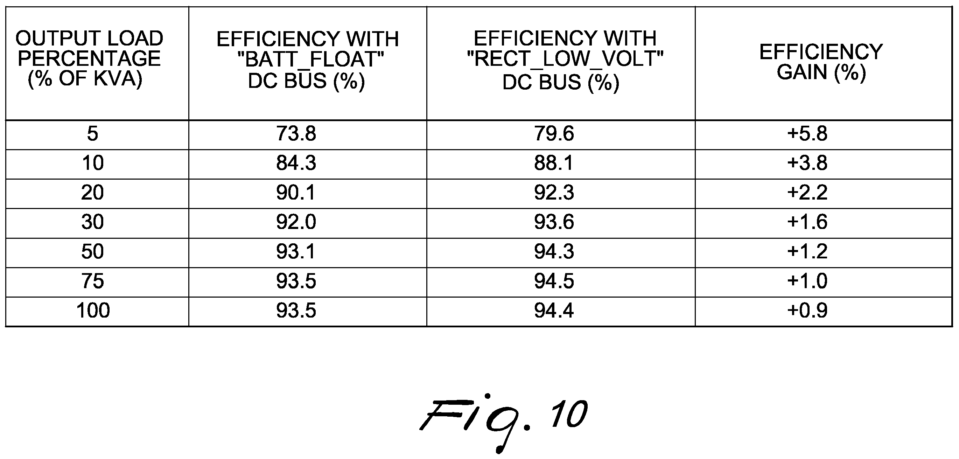

Figure 10 shows the comparisons between a conventional background art solution with the DC bus 1003 kept at "BATT_FLOAT" and the solution according to the invention, in which the DC bus is adjusted to a "RECT_LOW_VOLT" voltage.

The table of Figure 10 and the advantages of the invention are evident from the remarks that follow.

First of all, there is a significant operating cost reduction. For an equal load profile on the load 1007 of the user, an increase in conversion efficiency entails a minor use of power (and therefore energy consumption) on the side of the input electrical mains 1002. This leads to a lower operating cost of the UPS 100. By way of example, a 100 kVA machine that integrates the functions of the present invention and used with a power factor of 1 and kept constantly at 75% nominal load in output (statistically the representative charge) allows a saving of approximately 7400 kWh/year of power consumed by the mains 1002 with respect to the same solution of the background art.

A further saving resides in the lower power (usually of the electric type) that is required for conditioning the installation environment of the UPS and of its battery string, since the higher electrical efficiency of the UPS leads in fact to a lower emission of heat on the part of said UPS.

Another advantage of the invention is the higher reliability of the UPS. The semiconductors usually used to manufacture the components 101, 105, 1107, 1008, and 1009 have an MTBF ("Medium Time Between Failure") that decreases as the voltage across them at which the switching of the pulse width modulation (PWM) technique occurs. Keeping the bulk voltage low as in the present invention, i.e., at "RECT_LOW_VOLT", avoids the amplification of degenerative phenomena that are known in the literature, such as the effect of cosmic rays or degradation due to parasitic capacitors of the components themselves, increasing the MTBF of the UPS for equal components and structure of the machine.

Moreover, in contrast with the trend toward increasing the topological complexity of AC/DC rectification systems and of battery chargers in order to increase electrical efficiency, the present invention uses a simple solution that allows higher efficiency for equal components 101, 105, 1107, 1008 and 1009, leaving the MTBF substantially unchanged.

In system installations where redundancy on the load 1007 is required, usually two or more UPS units are placed, their outputs being connected in parallel. In an example of redundant parallel with two UPS units 100 with a nominal power of 100 kVA in which the load conditions are 100% of the nominal load of the installation, the two UPS units each provide 50 kVA of power to the load.

An increase in efficiency at low power values (in the example of 50 kVA) due to the solutions of the present invention if compared with the efficiency of a non-redundant system that had to supply all of the power to the load (i.e., 100 kVA) entails a saving in energy consumed by the primary electrical mains 1002 of approximately 7900 kWh/year, with the further advantage of redundancy on the load proper.

A further element that can be used to improve electrical efficiency (and therefore the operating cost) of the UPS 100 is the reduction of the switching frequency of the semiconductors of the AC/DC rectification system 101 and DC/AC inverter system 105 in modulation with the PWM method.

In particular, in the control system frequency with which the activation variables of the power devices 101, 105 and optionally 1107 are updated is an integer multiple or an integer submultiple of the PWM frequency. Typically, digital control algorithms are executed in their entirety once for each PWM cycle (real-time control); the activation variables of these controls are generally the control duty cycles of the IGBT/MOSFET/SCRs.

It is known that most closed-cycle linear control methods performed with a control frequency (FC) lead to pass-bands that at most can reach the value of FC/10 without sacrificing excessively the phase margin, which should not drop below 30°- 40°. In order to obtain acceptable dynamic performance, in particular in responses to load transients, the closed-cycle pass-band must have a sufficiently high value: this requirement is in contrast with the demand to lower the PWM frequency in order to improve electrical efficiency. In the UPS 100 according to the invention it is therefore possible to use different per se known methods in order to make the two requirements coexist.

For example, it is possible to use a frequency FC that is an integer multiple of the PWM frequency, preferably equal to twice the PWM frequency.

As an alternative, it is possible to use advanced control techniques, in which the control systems are synthesized with the aid of predictive schemes, such as finite delay compensators, Smith predictors, etc. Alternatively, it is possible to resort to nonlinear techniques that allow to exceed the above cited FC/10 limit and approach Shannon's theoretical limit of FC/2.

Optionally, it is possible to resort to mixed control schemes, in which part of the adjustment is performed in the digital domain and part is performed in the analog domain. In this manner it is possible to overcome the limitation set by digital systems, albeit with some disadvantages as regards immunity to noise.

The preferred solution that can be used in the UPS according to the invention is to set FC=2*FPWM, i.e., two updates of the control values at each PWM cycle, using the following techniques of the predictive type that aid the expansion of the pass-band for an equal PWM frequency without sacrificing the phase margin:
- AC/DC current sampling delay compensation technique: the sampling delay and the execution of digital control can be quantified as 1/ (2*FC), which makes the system a system with a pure finite delay. This delay can be approximated according to Padé with a polynomial representation that stops at the first order;
- feed-forward techniques for pre-determining the duty cycle: both in the adjustment of the AC/DC rectification system 101 and of the DC/AC inverter system 105, techniques are applied which pre-calculate the duty cycle to be applied to the respective bridges on the basis of the filtered readings of the input voltages from the mains 1002, half-bulk voltages on the capacitors 6a and 6b and instantaneous voltage produced by the UPS 100 on the load 1007.

The output load 1007 can have highly variable characteristics. It is possible in particular to have linear or nonlinear loads.

In linear loads, the impedance, i.e., the ratio between the voltage across the load and the current on the load, is constant over time or, in an equivalent manner, over the phase angle. Linear loads are then classified according to the power factor (i.e., the cosine of the angle between the first harmonic of the voltage across the terminals and the first harmonic of the current). With a unit power factor, one has resistive loads in which all the apparent power delivered by the UPS 100 is active power used by the load 1007. With a positive non-unit power factor, there are loads in which part of the apparent power delivered by the UPS 100 is active power and part is stored reactive power of the reactive elements of the load 1007 of the inductive type. With a negative non-unit power factor one has loads in which part of the apparent power delivered by the UPS 100 is active power and part is stored reactive power of the reactive elements of the load 1007 of the capacitive type.

In nonlinear loads, the impedance is not constant over time or, in an equivalent manner, depends on the phase angle. These types of load are characterized by a current absorption that is not sinusoidal, when they are powered by a voltage sinusoid in output from the DC/AC inverter system 105 and are therefore termed "distorting loads".

In order to improve harmonic distortion of the current absorbed by nonlinear loads, the UPS according to the invention can optionally use a scheme for compensating harmonics which is integrated in the DC/AC inverter system 105 without the additional use of external components.

The correction scheme, per se of a known type, calculates the active power P and the reactive power Q in the fundamental component and in the component due to harmonics other than the fundamental one, by means of a vector projection technique based on Clarke's transform. The harmonic current components that are found are then reinjected in the reference of the current ring with the opposite sign. Their influence on the duty cycle for controlling the DC/AC inverter system 105 allows their reduction/elimination in output.

In practice it has been found that the device and the method according to the invention, as well as the corresponding UPS, achieve fully the intended aim and objects.

The invention thus conceived is susceptible of numerous modifications and variations, all of which are within the scope of the appended claims. For example, the device 1 or even just the connection/disconnection assembly 3a/3b can be used also in other devices not of the UPS type, for example photovoltaic inverters or for industrial automation. In the case of photovoltaic applications, the system according to the invention can be arranged in series to the direct voltage source of the photovoltaic inverter (i.e., the photovoltaic field) in order to connect/disconnect the photovoltaic field from said inverter in case of failure. Moreover, a two-way photovoltaic inverter that can draw power from the output mains and return it to the direct section of the machine, the method according to the invention allows intelligent management of the direct-voltage part of the machine. A typical case is that of solar inverters that have an energy storage capacity in order to buffer the production peaks or for operation in the mode known in the literature as "night mode". In this application, the direct-voltage part of the inverter has the parallel arrangement between the photovoltaic panels and a battery string at high voltage with respect to which the photovoltaic inverter behaves like a battery charger/discharging system, all the remarks made in the invention for a UPS system being applicable thereto.

Other applications other than the UPS field for the present invention are inverters for three-phase electric motors. A three-phase electric motor is an electric machine that is capable of operating both in an absorption condition and in a generation condition, depending on the control technique that is used in the inverter that drives it. Since it can operate as a generator at some moments of its operating state, if it is coupled to a two-way inverter it allows to extract mechanical energy from the mechanical load and convert it into electric power that can be stored in a storage element arranged in the direct-voltage section of the inverter. The storage section of an inverter for electric motors thus constituted (constituted by a battery string or by banks of capacitors of different technology) can be interfaced with the DC bus by means of the same method developed in the present invention.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device (1, 11) for connecting/disconnecting batteries, particularly for a DC bus (103, 1103) of an uninterruptible power supply or UPS (100), comprising at least one pair of batteries with the same name plate data (4a, 4b; 1104a, 1104b) connected in series, so as to have a common node (F) at one of their poles, wherein the other pole of each one of the batteries (4a, 4b; 1104a, 1104b) is connected in series, or with the interposition of a battery charger (1107), to a respective connection/disconnection assembly (3a, 3b), each assembly (3a, 3b) comprising a pair of one-way switches (31a, 31b, 32a, 32b) each of which conduct current in only one direction and which are mutually connected in parallel and so as to conduct current in mutually opposite directions, **characterized in that** said common node (F) is connected by means of a third switch (2) to a point (P) at a substantially fixed potential, preferably to a neutral (N) or to a ground reference, so that said common node (F) is at a voltage that is substantially equal to the voltage of the point (P) even when the third switch is open, said third switch (2) being actuatable in order to modify the amplitude of the voltage ripple on said batteries (4a, 4b; 1104a, 1104b).

2. The device (1) according to claim 1, **characterized in that** at least one first switch (31a, 31b) of said pair of one-way switches can be controlled for switching on and off, in order to disconnect electrically said batteries from the DC bus (103, 1103).

3. The device (1) according to claim 1 or 2, **characterized in that** the first switch (31a, 31b) of said pair of one-way switches is a thyristor, such as an SCR, and the second switch (32a, 32b) of said pair of one-way switches is a diode.

4. The device (1) according to one or more of the preceding claims, **characterized in that** it further comprises at least one capacitor or capacitor bank (6a, 6b; 1006a, 1006b) which is connected in parallel to the series of said connection/disconnection assemblies with said pair of batteries or connected in parallel to said DC bus (103, 1103).

5. An uninterruptible power supply or UPS (100), comprising an AC/DC rectification system (101, 1101) connected to a DC/AC inverter system (105, 1105) by means of a DC bus (103, 1103), said AC/DC rectification system (101, 1101) having in input an AC mains voltage (1002) and said DC/AC inverter system (105, 1105) having in output a fourth switch (1008) in order to disconnect temporarily said output from a load (1007), **characterized in that** the device (1, 11) according to one or more of the preceding claims is connected to said DC bus (103, 1103), so that the batteries of said device (1, 11) constitute the battery of said UPS.

6. The uninterruptible power supply according to claim 5, **characterized in that** it comprises, or is connected to, a control system which is adapted to actuate at least the first switches (31a, 31b) of said device (1) in order to connect it to, or disconnect it from, the DC bus (103), to detect the voltage (V_BULK) on the DC bus (103) and to set setpoint voltages of said AC/DC rectification system (101).

7. The uninterruptible power supply according to claim 6, **characterized in that** said control system is adapted to implement a finite state machine, wherein the states comprise:
- a standby state (701), in which the first switch (31a, 31b) is open, the fourth switch (1008) is closed and the AC/DC and DC/AC systems (101, 105; 1101, 1105) are active, and wherein said AC/DC rectification system (101, 1101) is configured to produce in output on the DC bus (103, 1103) a first setpoint voltage (RECT_LOW_VOLT) whose value is lower, preferably by 5% -10%, than the nominal voltage (BATT_NOM_ZERO) of the battery (4a, 4b; 1104a, 1104b) of said UPS (100) in the charged state and at zero power, so as to supply the load (1007) while keeping said battery (4a, 4b; 1104a, 1104b) electrically disconnected from the DC bus (103, 1103);
- a wait state (703), in which the first switch (31a, 31b) is closed, the fourth switch (1008) is closed and the AC/DC and DC/AC systems (101, 105; 1101, 1105) are active, and wherein said AC/DC rectification system (101, 1101) is configured to produce in output on the DC bus (103, 1103) said first setpoint voltage (RECT_LOW_VOLT);
- a discharge state (704), in which the first switch (31a, 31b) is closed, the fourth switch (1008) is closed and the AC/DC and DC/AC systems (101, 105) are active, and wherein said AC/DC rectification system (101, 1101) is configured to produce in output on the DC bus (103, 1103) a second setpoint voltage (BATT_FLOAT) whose value is higher, preferably by 5% -10%, than the nominal voltage (BATT_NOM_ZERO) of the battery (4a, 4b) of said UPS (100) in the charged state and at zero power;
- a charging state (702), in which the first switch (31a, 31b) is open, the fourth switch (1008) is closed and the AC/DC and DC/AC systems (101, 105, 1101, 1105) are active, and wherein said AC/DC rectification system (101, 1101) is configured to produce in output on the DC bus (103, 1103) said second setpoint voltage (BATT_FLOAT).

8. The uninterruptible power supply according to claim 7, **characterized in that** said control system is configured to perform at least one of the following steps:
- passing from the standby state (701) or from the charging state (702) to the wait state (703) if it determines that the voltage on the DC bus (103, 1103) is lower than at least one voltage threshold (SLOW_BULK_VOLT, FAST_BULK_VOLT);
- passing from the wait state (703) to the discharge state (704) after a preset time (TIME_WAIT);
- remaining in the discharge stage (704) so long as the battery (4a, 4b; 1104a, 1104b) of the UPS (100) is not discharged;
- passing from the discharge state (704) to the charging state (702) when the battery (4a, 4b; 1104a, 1104b) of the UPS (100) is discharged;
- passing from the charging state (702) to the standby state (701) when the battery is charged to the nominal voltage value (BATT_NOM_ZERO) of the battery (4a, 4b; 1104a, 1104b) of said UPS (100) in the charged state and at zero power.

9. The uninterruptible power supply according to one or more of claims 5-8, **characterized in that** said DC/AC inverter system (105, 1105) comprises in output a bypass switch (1009) for connection to an emergency electrical mains (1010).

10. The uninterruptible power supply according to claim 9, **characterized in that** said states further comprise:
- a saving state (706), in which the first switch (31a, 31b) is closed, the fourth switch (1008) is open, the bypass switch (1009) is closed and the AC/DC and DC/AC systems (101, 105) are inactive;
- a test state (705), in which the first switch (31a, 31b) is closed, the fourth switch (1008) is open, the bypass switch (1009) is closed and the AC/DC and DC/AC systems (101, 105; 1101, 1105) are active, and wherein said AC/DC rectification system (101, 1101) is configured to produce in output on the DC bus (103, 1103) said first setpoint voltage (RECT_LOW_VOLT).

11. The uninterruptible power supply according to claim 10, **characterized in that** said control system is configured to perform at least one of the following steps:
- passing to the test state (705) from the standby state (701);
- passing from the test state (705) to the saving state (706) if the voltage on the DC bus (103, 1103) exceeds the first setpoint voltage (RECT_LOW_VOLT);
- passing from the saving state (706) to the wait state (703) if the voltage of the emergency mains (1010) exceeds preset tolerance levels, said bypass switch (1009) being open in said wait, standby, discharge and charging states.

12. An inverter of the type comprising a DC bus for connection to storage batteries adapted to be discharged and recharged, **characterized in that** it comprises a device according to one or more of claims 1-4 connected to said DC bus.

## Patentansprüche

1. Eine Vorrichtung (1, 11) zum Anschließen/Trennen von Batterien, insbesondere für einen Gleichstrombus (103, 1103) einer unterbrechungsfreien Stromversorgung oder USV (100), die mindestens ein Paar seriell verbundener Batterien mit denselben Namensschilddaten (4a, 4b; 1104a, 1104b) hat, um so an einem ihrer Pole einen gemeinsamen Knoten (F) zu haben, wobei der andere Pol jeder der Batterien (4a, 4b; 1104a, 1104b) seriell oder durch Zwischenschaltung eines Ladegeräts (1107) mit einem entsprechenden Anschluss-/Trennaufbau (3a, 3b) verbunden ist, wobei jeder Aufbau (3a, 3b) ein Paar einfacher Schalter (31a, 31b, 32a, 32b) umfasst, die jeweils nur in eine Richtung Strom leiten und miteinander parallel verbunden sind, um Strom in einander entgegengesetzte Richtungen zu leiten, **dadurch gekennzeichnet, dass** der gemeinsame Knoten (F) über einen dritten Schalter (2) mit einem Punkt (P) mit im Wesentlichen festem Potential verbunden ist, vorzugsweise mit einem Neutralleiter (N) oder einem Massenbezugspunkt, so dass der gemeinsame Knoten (F) eine Spannung hat, die im Wesentlichen gleich der Spannung des Punkts (P) ist, selbst wenn der dritte Schalter offen ist, wobei der dritte Schalter (2) betätigt werden kann, um die Amplitude der Spannungswelligkeit an den Batterien (4a, 4b; 1104a, 1104b) zu modifizieren.

2. Die Vorrichtung (1) gemäß Anspruch 1, **dadurch gekennzeichnet, dass** mindestens ein erster Schalter (31a, 31b) des Paares einfacher Schalter zum Ein- und Ausschalten gesteuert werden kann, um die Batterien elektrisch vom Gleichstrombus (103, 1103) zu trennen.

3. Die Vorrichtung (1) gemäß Anspruch 1 oder 2, **dadurch gekennzeichnet, dass** der erste Schalter (31a, 31b) des Paares einfacher Schalter ein Thyristor ist, wie ein SCR, und der zweite Schalter (32a, 32b) des Paares einfacher Schalter eine Diode ist.

4. Die Vorrichtung (1) gemäß einem oder mehreren der obigen Ansprüche, **dadurch gekennzeichnet, dass** sie weiter mindestens einen Kondensator oder mindestens eine Kondensatorbatterie (6a, 6b; 1006a, 1006b) umfasst, die parallel mit der Reihe der Verbindungs-/Trennaufbauten mit dem Paar von Batterien oder parallel mit dem Gleichstrombus (103, 1103) verbunden ist.

5. Eine unterbrechungsfreie Stromversorgung oder USV (100), die ein WS/GS-Gleichrichtungssystem (101, 1101) umfasst, das über einen Gleichstrombus (103, 1103) mit einem GS/WS-Wechselrichtersystem (105, 1105) verbunden ist, wobei das WS/GS-Gleichrichtungssystem (101, 1101) eine WS-Netzspannung (1002) am Eingang hat und das GS/WS-Wechselrichtersystem (105, 1105) einen vierten Schalter (1008) am Ausgang hat, um den Ausgang vorübergehend von einer Last (1007) zu trennen, **dadurch gekennzeichnet, dass** die Vorrichtung (1, 11) gemäß einem oder mehreren der obigen Ansprüche so mit dem Gleichstrombus (103, 1103) verbunden ist, dass die Batterien der Vorrichtung (1, 11) die Batterie der USV bilden.

6. Die unterbrechungsfreie Stromversorgung gemäß Anspruch 5, **dadurch gekennzeichnet, dass** sie ein Steuerungssystem umfasst oder damit verbunden ist, welches ausgebildet ist, um mindestens die ersten Schalter (31a, 31b) der Vorrichtung (1) zu betätigen, um sie mit dem Gleichstrombus (103) zu verbinden oder davon zu trennen, um die Spannung (V_BULK) am Gleichstrombus (103) zu erfassen und um Sollwertspannungen des WS/GS-Gleichrichtungssystems (101) festzulegen.

7. Die unterbrechungsfreie Stromversorgung gemäß Anspruch 6, **dadurch gekennzeichnet, dass** das Steuerungssystem ausgebildet ist, um eine Maschine endlicher Zustände zu implementieren, wobei die Zustände Folgendes umfassen:
- einen Bereitschaftszustand (701), in dem der erste Schalter (31a, 31b) offen ist, der vierte Schalter (1008) geschlossen ist und die WS/GS- und GS/WS-Systeme (101, 105; 1101, 1105) aktiv sind und in dem das WS/GS-Gleichrichtungssystem (101, 1101) konfiguriert ist, um im Ausgang am Gleichstrombus (103, 1103) eine erste Sollwertspannung (RECT_LOW_VOLT) zu erzeugen, deren Wert niedriger, vorzugsweise um 5%-10%, ist als die Nennspannung (BATT_NOM_ZERO) der Batterie (4a, 4b; 1104a, 1104b) der USV (100) im geladenen Zustand und bei Blindlast, um so die Last (1007) zuzuführen, während die Batterie (4a, 4b; 1104a, 1104b) elektrisch vom Gleichstrombus (103, 1103) getrennt gehalten wird;
- einen Wartezustand (703), in dem der erste Schalter (31a, 31b) geschlossen ist, der vierte Schalter (1008) geschlossen ist und die WS/GS- und GS/WS-Systeme (101, 105; 1101, 1105) aktiv sind und in dem das WS/GS-Gleichrichtungssystem (101, 1101) konfiguriert ist, um im Ausgang am Gleichstrombus (103, 1103) die erste Sollwertspannung (RECT_LOW_VOLT) zu erzeugen;
- einen Entladezustand (704), in dem der erste Schalter (31a, 31b) geschlossen ist, der vierte Schalter (1008) geschlossen ist und die WS/GS- und GS/WS-Systeme (101, 105) aktiv sind und in dem das WS/GS-Gleichrichtungssystem (101, 1101) konfiguriert ist, um im Ausgang am Gleichstrombus (103, 1103) eine zweite Sollwertspannung (BATT_FLOAT) zu erzeugen, deren Wert höher ist, vorzugsweise um 5%-10%, als die Nennspannung (BATT_NOM_ZERO) der Batterie (4a, 4b) der USV (100) im geladenen Zustand und bei Blindleistung;
- einen Ladezustand (702), in dem der erste Schalter (31a, 31b) offen ist, der vierte Schalter (1008) geschlossen ist und die WS/GS- und GS/WS-Systeme (101, 105, 1101, 1105) aktiv sind und in dem das WS/GS-Gleichrichtungssystem (101, 1101) konfiguriert ist, um im Ausgang am Gleichstrombus (103, 1103) die zweite Sollwertspannung (BATT_FLOAT) zu erzeugen.

8. Die unterbrechungsfreie Stromversorgung gemäß Anspruch 7, **dadurch gekennzeichnet, dass** das Steuerungssystem konfiguriert ist, um mindestens einen der folgenden Schritte durchzuführen:
- Übergehen vom Bereitschaftszustand (701) oder vom Ladezustand (702) in den Wartezustand (703), wenn es feststellt, dass die Spannung am Gleichstrombus (103, 1103) niedriger ist als mindestens ein Spannungs-Schwellenwert (SLOW_BULK_VOLT, FAST_BULK_VOLT);
- Wechseln vom Wartezustand (703) in den Entladezustand (704) nach einer voreingestellten Zeit (TIME_WAIT);
- Bleiben im Entladezustand (704), solange die Batterie (4a, 4b; 1104a, 1104b) der USV (100) nicht entladen ist;
- Übergehen vom Entladezustand (704) in den Ladezustand (702), wenn die Batterie (4a, 4b; 1104a, 1104b) der USV (100) entladen ist;
- Übergehen vom Ladezustand (702) in den Bereitschaftszustand (701), wenn die Batterie auf den Spannungs-Nennwert (BATT_NOM_ZERO) der Batterie (4a, 4b; 1104a, 1104b) der USV (100) geladen wurde, im geladenen Zustand und bei Blindleistung.

9. Die unterbrechungsfreie Stromversorgung gemäß einem oder mehreren der Ansprüche 5-8, **dadurch gekennzeichnet, dass** das GS/WS-Wechselrichtersystem (105, 1105) am Ausgang einen Überbrückungsschalter (1009) zur Verbindung mit einem Not-Stromnetz (1010) umfasst.

10. Die unterbrechungsfreie Stromversorgung gemäß Anspruch 9, **dadurch gekennzeichnet, dass** die Zustände weiter Folgendes umfassen:
- einen Sparzustand (706), in dem der erste Schalter (31a, 31b) geschlossen ist, der vierte Schalter (1008) offen ist, der Überbrückungsschalter (1009) geschlossen ist und die WS/GS- und GS/WS-Systeme (101, 105) inaktiv sind;
- einen Testzustand (705), in dem der erste Schalter (31a, 31b) geschlossen ist, der vierte Schalter (1008) offen ist, der Überbrückungsschalter (1009) geschlossen ist und die WS/GS- und GS/WS-Systeme (101, 105; 1101, 1105) aktiv sind und in dem das WS/GS-Gleichrichtungssystem (101, 1101) konfiguriert ist, um am Ausgang am Gleichstrombus (103, 1103) die erste Sollwertspannung (RECT_LOW_VOLT) zu erzeugen.

11. Die unterbrechungsfreie Stromversorgung gemäß Anspruch 10, **dadurch gekennzeichnet, dass** das Steuerungssystem konfiguriert ist, um mindestens einen der folgenden Schritte durchzuführen:
- Übergehen vom Bereitschaftszustand (701) in den Testzustand (705) ;
- Übergehen vom Testzustand (705) in den Sparzustand (706), wenn die Spannung am Gleichstrombus (103, 1103) die erste Sollwertspannung (RECT_LOW_VOLT) überschreitet;
- Übergehen vom Sparzustand (706) in den Wartezustand (703), wenn die Spannung des Not-Stromnetzes (1010) voreingestellte Toleranzwerte überschreitet, wobei der Überbrückungsschalter (1009) in den Warte-, Bereitschafts-, Entlade- und Ladezuständen offen ist.

12. Ein Wechselrichter von der Art, die einen Gleichstrombus umfasst, zur Verbindung mit Sammelbatterien, die ausgebildet sind, um entladen und wieder aufgeladen zu werden, **dadurch gekennzeichnet, dass** er eine Vorrichtung gemäß einem oder mehreren der Ansprüche 1-4 umfasst, die mit dem Gleichstrombus verbunden ist.

## Revendications

1. Dispositif (1, 11) de connexion / déconnexion de batteries, en particulier, pour un bus CC (103, 1103) d'une alimentation sans interruption ou UPS (100), comprenant au moins deux batteries avec la même plaque signalétique (4a, 4b ; 1104a, 1104b) montées en série, de manière à avoir un noeud commun (F) à un de leurs pôles, dans lequel l'autre pôle de chacune des batteries (4a, 4b ; 1104a, 1104b) est monté en série, ou avec l'interposition d'un chargeur de batteries (1107), sur un ensemble de connexion / déconnexion respectif (3a, 3b), chaque ensemble (3A, 3b) comprenant deux interrupteurs unidirectionnels (31a, 31b, 32a, 32b) chacun conduisant le courant dans une seule direction et qui sont réciproquement montés en série, de manière à conduire le courant dans des directions réciproquement opposées, **caractérisé en ce que** ledit noeud commun (F) est raccordé au moyen d'un troisième interrupteur (2) en un point (P) à un potentiel sensiblement fixe, de préférence, à un neutre (N) ou à une terre de référence, de sorte que ledit noeud commun (F) est à une tension qui est sensiblement égale à la tension du point (P), même lorsque le troisième interrupteur est ouvert, ledit troisième interrupteur (2) pouvant être actionné de manière à modifier l'amplitude de l'ondulation de tension sur lesdites batteries (4a, 4b ; 1104a, 1104b).

2. Dispositif (1) selon la revendication 1, **caractérisé en ce qu'**au moins un premier interrupteur (31a, 31b) desdits deux interrupteurs unidirectionnels peut être commandé pour la mise en marche et à l'arrêt, de manière à déconnecter électriquement lesdites batteries du bus CC (103, 1103).

3. Dispositif (1) selon la revendication 1 ou 2, **caractérisé en ce que** le premier interrupteur (31a, 31b) desdits deux interrupteurs unidirectionnels est un thyristor, tel qu'un RCS (redresseur commandé au silicium), et le second interrupteur (32a, 32b) desdits deux interrupteurs unidirectionnels est une diode.

4. Dispositif (1) selon une ou plusieurs des revendications précédentes, **caractérisé en ce qu'**il comprend, en outre, au moins un condensateur ou une batterie de condensateurs (6A, 6b ; 1006a, 1006b) qui est monté(e) en parallèle sur la série desdits ensembles de connexion / déconnexion avec lesdites deux batteries ou monté(e) en parallèle sur ledit bus CC (103, 1103).

5. Alimentation sans interruption ou UPS (100), comprenant un système de redressement CA / CC (101, 1101) raccordé à un système onduleur CC / CA (105, 1105) au moyen d'un bus CC (103, 1103), ledit système de redressement CA / CC (101, 1101) ayant, en entrée, une tension d'alimentation (1002) et ledit système onduleur CC / CA (105, 1105) ayant, en sortie, un quatrième interrupteur (1008), de manière à déconnecter temporairement ladite sortie d'une charge (1007), **caractérisée en ce que** le dispositif (1, 11) selon une ou plusieurs des revendications précédentes est raccordé audit bus CC (103, 1103), de sorte que les batteries dudit dispositif (1, 11) constituent la batterie de ladite UPS.

6. Alimentation sans interruption selon la revendication 5, **caractérisée en ce qu'**elle comprend, ou est raccordée à, un système de commande qui est conçu pour actionner au moins les premiers interrupteurs (31a, 31b) dudit dispositif (1), de manière à le raccorder au bus CC (103), ou à l'en déconnecter, pour détecter la tension (V_BULK) sur le bus CC (103) et pour régler des tensions de consigne dudit système de redressement CA / CC (101).

7. Alimentation sans interruption selon la revendication 6, **caractérisée en ce que** ledit système de commande est conçu pour mettre en oeuvre une machine à états finis, dans laquelle les états comprennent :
- un état de repos (701), dans lequel le premier interrupteur (31a, 31b) est ouvert, le quatrième interrupteur (1008) est fermé et les systèmes CA / CC et CC / CA (101, 105 ; 1101, 1105) sont actifs, et dans lequel ledit système de redressement CA / CC (101, 1101) est configuré pour produire, en sortie, sur le bus CC (103, 1103), une première tension de consigne (RECT_LOW_VOLT) dont la valeur est inférieure, de préférence, de 5 % - 10 %, à la tension nominale (BATT_NOM_ZERO) de la batterie (4a, 4b ; 1104a, 1104b) de ladite UPS (100) à l'état chargé et à puissance nulle, de manière à fournir la charge (1007) tout en maintenant ladite batterie (4a, 4b ; 1104a, 1104b) électriquement déconnectée du bus CC (103, 1103) ;
- un état d'attente (703), dans lequel le premier interrupteur (31a, 31b) est fermé, le quatrième interrupteur (1008) est fermé et les systèmes CA / CC et CC / CA (101, 105 ; 1101, 1105) sont actifs, et dans lequel ledit système de redressement CA / CC (101, 1101) est configuré pour produire, en sortie, sur le bus CC (103, 1103), ladite première tension de consigne (RECT_LOW_VOLT) ;
- un état de décharge (704), dans lequel le premier interrupteur (31a, 31b) est fermé, le quatrième interrupteur (1008) est fermé et les systèmes CA / CC et CC / CA (101, 105) sont actifs, et dans lequel ledit système de redressement CA / CC (101, 1101) est configuré pour produire, en sortie, sur le bus CC (103, 1103), une seconde tension de consigne (BATT_FLOAT) dont la valeur est supérieure, de préférence, de 5 % - 10 %, à la tension nominale (BATT_NOM_ZERO) de la batterie (4a, 4b) de ladite UPS (100) à l'état chargé et à puissance nulle ;
- un état de charge (702), dans lequel le premier interrupteur (31a, 31b) est ouvert, le quatrième interrupteur (1008) est fermé et les systèmes CA / CC et CC / CA (101, 105 ; 1101, 1105) sont actifs, et dans lequel ledit système de redressement CA / CC (101, 1101) est configuré pour produire, en sortie, sur le bus CC (103, 1103), ladite seconde tension de consigne (BATT_FLOAT).

8. Alimentation sans interruption selon la revendication 7, **caractérisée en ce que** ledit système de commande est configuré pour réaliser au moins une des étapes suivantes :
- passage de l'état de repos (701) ou de l'état de charge (702) à l'état d'attente (703), s'il détermine que la tension sur le bus CC (103, 1103) est inférieure à au moins un seuil de tension (SLOW_BULK_VOLT, FAST_BULK_VOLT) ;
- passage de l'état d'attente (703) à l'état de décharge (704) après un temps prédéterminé (TIME-WAIT) ;
- maintien à l'étape de décharge (704) tant que la batterie (4a, 4b ; 1104a, 1104b) de l'UPS (100) n'est pas déchargée ;
- passage de l'état de décharge (704) à l'état de charge (702), lorsque la batterie (4a, 4b ; 1104a, 1104b) de l'UPS (100) est déchargée ;
- passage de l'état de charge (702) à l'état de repos (701), lorsque la batterie est chargée à la valeur de tension nominale (BATT_NOM_ZERO) de la batterie (4a, 4b ; 1104a, 1104b) de ladite l'UPS (100) à l'état chargé et à puissance nulle.

9. Alimentation sans interruption selon une ou plusieurs des revendications 5 à 8, **caractérisée en ce que** ledit système onduleur CC / CA (105, 1105) comprend, en sortie, un interrupteur de contournement (1009) pour le raccordement à un réseau électrique de secours (1010).

10. Alimentation sans interruption selon la revendication 9, **caractérisée en ce que** lesdits états comprennent, en outre :
- un état d'économie d'énergie (706), dans lequel le premier interrupteur (31a, 31b) est fermé, le quatrième interrupteur (1008) est ouvert, l'interrupteur de contournement (1009) est fermé, et les systèmes CA / CC et CC / CA (101, 105) sont inactifs ;
- un état d'essai (705), dans lequel le premier interrupteur (31a, 31b) est fermé, le quatrième interrupteur (1008) est ouvert, l'interrupteur de contournement (1009) est fermé, et les systèmes CA / CC et CC / CA (101, 105 ; 1101, 1105) sont actifs, et dans lequel ledit système de redressement CA / CC (101, 1101) est configuré pour produire, en sortie, sur le bus CC (103, 1103), ladite première tension de consigne (RECT_LOW_VOLT).

11. Alimentation sans interruption selon la revendication 10, **caractérisée en ce que** ledit système de commande est configuré pour réaliser au moins une des étapes suivantes :
- passage à l'état d'essai (705) à partir de l'état de repos (701) ;
- passage de l'état d'essai (705) à l'état d'économie d'énergie (706), si la tension sur le bus CC (103, 1103) dépasse la première tension de consigne (RECT_LOW_VOLT) ;
- passage de l'état d'économie d'énergie (706) à l'état d'attente (703), si la tension du réseau d'urgence (1010) dépasse des niveaux de tolérance prédéterminés, ledit interrupteur de contournement (1009) étant ouvert auxdits états de charge, de décharge, de repos et d'attente.

12. Onduleur du type comprenant un bus CC pour le raccordement à des batteries de stockage conçues pour être déchargées et rechargées, **caractérisé en ce qu'**il comprend un dispositif selon une ou plusieurs des revendications 1 à 4, raccordé audit bus CC.
